# EUROPÄISCHE PATENTSCHRIFT

(11) **EP 2 591 049 B1**
(45) Veröffentlichungstag und Bekanntmachung des Hinweises auf die Patenterteilung: **16.05.2018**
(21) Anmeldenummer: 11725375.7
(22) Anmeldetag: 31.05.2011
(51) Int. Cl.: C08L 7/00, C08L 9/06, C08L 21/00

(54) **KAUTSCHUKMISCHUNG**
RUBBER MIXTURE
MÉLANGE DE CAOUTCHOUC

(30) Priorität: 08.07.2010 DE 102010017805
(43) Veröffentlichungstag der Anmeldung: 15.05.2013
(73) Patentinhaber: Continental Reifen Deutschland GmbH, 30165 Hannover (DE)
(72) Erfinder: RIECHERS, Torsten, 30171 Hannover (DE); KÖLLE, Philipp, 70199 Stuttgart (DE); KRAMER, Thomas, 32049 Herford (DE); HERZOG, Katharina, 31177 Harsum (DE); RECKER, Carla, 30167 Hannover (DE); MÜLLER, Lena, 31604 Raddestorf (DE)
(74) Vertreter: Preusser, Andrea
(86) Internationale Anmeldenummer: PCT/EP2011/058888
(87) Internationale Veröffentlichungsnummer: WO 2012/004054

(56) Entgegenhaltungen:
- EP-A1- 0 890 603
- EP-A1- 1 757 658
- EP-A1- 2 246 200
- EP-A1- 2 338 698
- EP-A2- 1 367 059
- WO-A1-2009/112220
- JP-A- 2007 291 218

## Beschreibung

Die Erfindung betrifft eine Kautschukmischung, insbesondere für Fahrzeugluftreifen, Gurte, Riemen und Schläuche.

Um die physikalischen Eigenschaften einer Kautschukmischung, die beispielsweise in Fahrzeugluftreifen oder technischen Gummiartikeln, wie Gurte, Riemen und Schläuche, Verwendung findet, zu optimieren, sind in der Fachwelt verschiedene Maßnahmen bekannt. So wurden vielfältige Versuche unternommen, die Eigenschaften des Reifens durch die Variation der Polymerkomponenten und der weiteren Zuschlagstoffe in der Laufstreifenmischung positiv zu beeinflussen. Als Zuschlagstoffe seien beispielhaft an dieser Stelle Füllstoffe, z. B. Ruß und Kieselsäure, und weitere, Weichmacher, Alterungsschutzmittel und Vernetzungssysteme aus Schwefel, Beschleuniger und Aktivator genannt. Wird durch Variation der Mischung allerdings eine Eigenschaft verbessert, geht dies aber häufig mit einer Verschlechterung einer anderen Eigenschaft einher, so dass gewisse Zielkonflikte vorliegen. Insbesondere das Rollwiderstandsverhalten spielt nicht nur bei Fahrzeugluftreifen, sondern auch bei technischen Gummiartikeln eine große Rolle. Eine Verbesserung des Rollwiderstandsverhaltens führt dabei aber zwangsläufig zu einer Verschlechterung weiterer physikalischer Eigenschaften der Vulkanisate, wie z.B. Nassgriff und / oder Bruchdehnung. Aus JP2007291218A ist beispielsweise für Kautschukmischungen, die Kieselsäure als Füllstoff und Silan enthalten, bekannt, hierzu eine spezielle oberflächenaktive Substanz zu verwenden. Eine andere spezielle oberflächenaktive Substanz wird in KR1019960007760B1 vorgeschlagen, um die Dispersion des polaren Füllstoffs (= Kieselsäure) in einem unpolaren Polymer zu verbessern. EP1757658 offenbart eine Zusammensetzung enthaltend polyoxyethylen Fettsäureester als amphiphile Verbindung. Dadurch sollen sich die physikalischen Eigenschaften der kieselsäurehaltigen Kautschukmischung ebenso verbessern. Da es sich bei Ruß um einen unpolaren Füllstoff handelt, wurde bisher davon ausgegangen, dass die Verwendung von zusätzlichen Mischungskomponenten, wie sie in Kautschukmischungen, welche überwiegend polare Füllstoffe enthalten, zum Einsatz kommen, in überwiegend russhaltigen Kautschukmischungen keinen Einfluss auf die Dispersion des Ruß zeigen.

Der Erfindung liegt daher die Aufgabe zu Grunde, eine Kautschukmischung, welche insbesondere Ruß als Füllstoff enthält, bereitzustellen, die die Zielkonflikte zwischen Rollwiderstand versus Nassgriff löst oder zumindest entschärft, ohne die weiteren physikalischen Eigenschaften, insbesondere die Bruchdehnungseigenschaften, negativ zu beeinflussen.

Gelöst wird diese Aufgabe durch die Bereitstellung einer Kautschukmischung, die wenigstens einen synthetischen Dienkautschuk und wenigstens einen Ruß und wenigstens ein Silan und wenigstens eine amphiphile Verbindung enthält, wobei das Silan ein Mercaptosilan ist und wobei die amphiphile Verbindung ein nichtionisches Tensid ist und wobei das nichtionische Tensid ein Polyoxyethylen-Fettsäureester ist. Überraschenderweise wurde gefunden, dass eine derartige Kautschukmischung ein optimiertes Rollwiderstandsverhalten aufweist, ohne die weiteren physikalischen Eigenschaften, wie Nassgriff oder Bruchdehnung negativ zu beeinflussen. Die Kombination aus wenigstens einem Silan und wenigstens einer amphiphilen Verbindung in einer russhaltigen Kautschukmischung führt zu einer verbesserten Dispersion des Ruß in synthetischen Dienkautschuken, was sich wiederum in den bereits genannten Vorteilen widerspiegelt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung enthält zumindest einen synthetischen Dienkautschuk.

Vorzugsweise ist dieser ausgewählt aus der Gruppe, bestehend aus synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk, wobei besonders gute Eigenschaften bei der Verwendung eines lösungspolymerisierten Styrolbutadienkautschuks erzielt werden.
Der lösungspolymerisierte Styrolbutadienkautschuk kann in einer besonderen Ausführungsform hydriert sein und / oder mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert sein. Es kommen aber auch weitere, der fachkundigen Person bekannte, Modifizierungen, auch als Funktionalisierungen bezeichnet, in Frage
Der synthetische Dienkautschuk wird bevorzugt in Mengen von 10 bis 100 phr, besonders bevorzugt in Mengen von 30 bis 100 phr, ganz besonders bevorzugt in Mengen von 50 bis 100 phr verwendet.

In der Kautschukmischung können aber auch noch weitere polare oder unpolare Kautschuke enthalten sein, wie beispielsweise natürliches Polyisopren und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.

Der weitere Kautschuk kann bevorzugt in Mengen von 0 bis 20 phr, besonders in Mengen von 0 bis 10 phr verwendet werden.

Die erfindungsgemäße Kautschukmischung enthält des Weiteren zumindest einen Ruß.

Der Ruß wird bevorzugt in Mengen von 1 - 100 phr, besonders bevorzugt in Mengen von 10 - 80 phr, ganz besonders bevorzugt in Mengen von 20 bis 70phr verwendet. In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.

Weiterhin ist es möglich, dass die erfindungsgemäße Kautschukmischung zusätzlich wenigstens einen hellen Füllstoff enthält. Bevorzugt ist es, wenn der helle Füllstoff Kieselsäure, bevorzugt Fällungskieselsäure ist. Es können hierbei aller der fachkundigen Person bekannte Kieselsäuren verwendet werden,

Erfindungswesentlich ist es, dass die Kautschukmischung wenigstens ein Silan und wenigstens eine amphiphile Verbindung enthält, wobei das Silan ein Mercaptosilan ist und wobei die amphiphile Verbindung ein nichtionisches Tensid ist und wobei das nichtionische Tensid ein Polyoxyethylen-Fettsäureester ist. Nur dann zeigen sich die Vorteile hinsichtlich des Rollwiderstandsverhaltens ohne Nachteile im Nassgriff oder in weiteren physikalischen Eigenschaften, insbesondere in dem Bruchdehnungsverhalten.

Das Mercaptosilan, auch als siliziumorganischen Verbindung bezeichnet, wird bevorzugt in Mengen von 0,3 bis 5 phr, besonders bevorzugt in Mengen von 0,3 bis 3 phr, ganz besonders bevorzugt 0,3 bis 2 phr verwendet. Es können alle der fachkundigen Person bekannten und in der Kautschukindustrie üblichen Silane verwendet werden. Mercaptosilane, insbesondere ungeblockte oder nur teilweise geblockte Mercaptosilane sind besonders vorteilhaft. Derartige Mercaptosilane sind zum Beispiel unter dem Handelsnamen Si263 oder Si363 von Evonik Industries erhältlich. Es können aber auch die unter dem Handelsnamen NXT-Z-Typen erhältlichen Silane von Momentive Performance Materials inc., verwendet werden.

Die erfindungsgemäße Kautschukmischung enthält wenigstens eine amphiphile Verbindung, die amphiphile Verbindung ein nichtionisches Tensid ist und ein Polyoxyethylen-Fettsäureester ist und zwar bevorzugt in Mengen von 0,5 bis 10 phr, besonders bevorzugt in Mengen von 0,5 bis 5 phr, ganz besonders bevorzugt in Mengen von 1 bis 3 phr. Hierbei zeigen sich besonders gute Eigenschaften hinsichtlich der Entschärfung der Zielkonflikte Rollwiderstand versus Nassgriff.

Weiterhin enthält die Kautschukmischung noch weitere Zusatzstoffe.

Weitere Zusatzstoffe beinhaltet im Wesentlichen das Vernetzungssystem (Vernetzer, Schwefelspender und / oder elementaren Schwefel, Beschleuniger und Verzögerer), Ozonschutzmittel, Alterungsschutzmittel, Mastikationshilfsmittel und weitere Aktivatoren. Der Mengenanteil der Gesamtmenge an weiteren Zusatzstoffen beträgt 3 bis 150 phr, bevorzugt 3 bis 100 phr und besonders bevorzugt 5 - 80 phr.

Die Vulkanisation der Kautschukmischung wird für die Verwendung in Fahrzeugluftreifen vorzugsweise in Anwesenheit von elementarem Schwefel oder Schwefelspendern durchgeführt, wobei einige Schwefelspender zugleich als Vulkanisationsbeschleuniger wirken können. Elementarer Schwefel oder Schwefelspender werden im letzten Mischungsschritt in den von der Fachkundigen Person gebräuchlichen Mengen (0,4 bis 10 phr, elementarer Schwefel bevorzugt in Mengen von 0 bis 6 phr, besonders bevorzugt in Mengen von 0,1 bis 4 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren, die in den obig beschriebenen Zusatzstoffen enthalten sind, enthalten.
Vorteilhaft ist es, wenn die erfindungsgemäße Kautschukmischung 0,1 bis 6 phr, bevorzugt 1 bis 5 phr, zumindest eines Vulkanisationsbeschleunigers enthält.
Der Vulkanisationsbeschleuniger ist bevorzugt ausgewählt ist aus der Gruppe der Sulfenamidbeschleuniger und / oder Thiazolbeschleuniger und / oder Thiurambeschleuniger und / oder Mercaptobeschleuniger und / oder Dithiocarbamatbeschleuniger und /oder Aminbeschleuniger und / oder Dithiophosphate und / oder Thioharnstoffe, wobei Sulfenamidbeschleuniger bevorzugt sind.
Als Sulfenamidbeschleuniger findet bevorzugt Benzothiazyl-2-cyclohexylsulfenamid (CBS) Verwendung.

Die Herstellung der erfindungsgemäßen Kautschukmischung erfolgt zumeist nach dem in der Kautschukindustrie üblichen Verfahren, bei dem zunächst in ein oder mehreren Mischstufen eine Grundmischung mit allen Bestandteilen außer dem Vulkanisationssystem (bspw. Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Für die erfindungsgemäße Kautschukmischung hat es sich allerdings als sehr vorteilhaft gezeigt, wenn sie nach einem Verfahren hergestellt wird, bei dem wenigstens ein synthetischer Dienkautschuk, wenigstens ein Silan, wenigstens ein Ruß und wenigstens eine amphiphile Verbindung, wobei das Silan ein Mercaptosilan ist und wobei die amphiphile Verbindung ein nichtionisches Tensid ist und wobei das nichtionische Tensid ein Polyoxyethylen-Fettsäureester ist in einer ersten Mischstufe in einem Mischer miteinander vermischt werden. Alle weiteren Mischungsbestandteile werden in einer oder mehreren darauffolgenden Mischstufe(n) hinzugefügt.

Der Erfindung liegt weiterhin die Aufgabe zu Grunde, obig beschriebene Kautschukmischung, zur Herstellung von Reifen, insbesondere zur Herstellung des Laufstreifens eines Reifens und / oder einer Body-Mischung eines Reifens und zur Herstellung von Riemen, Gurten und Schläuchen zu verwenden.

Bei dem Reifen kann es sich um einen LKW-Reifen, einen PKW-Reifen oder um einen Zweiradreifen handeln. Bevorzugt ist allerdings die Verwendung der erfindungsgemäßen Kautschukmischung in einem LKW-Reifen und zwar dort bevorzugt als Kautschukmischung für den Laufstreifen.

Als Body-Mischung eines Reifens werden im Wesentlichen die Kautschukmischungen für Seitenwand, Innenseele, Apex, Gürtel, Schulter, Gürtelprofil, Squeege, Karkasse, Wulstverstärker und / oder Bandage bezeichnet.

Zur Verwendung in Fahrzeugluftreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweiteilig oder auch mehrteilig, so findet die Kautschukmischung bevorzugt Anwendung als Mischung für die Cap.

Die Herstellung der erfindungsgemäßen Kautschukmischung zur Verwendung als Body-Mischung in Fahrzeugreifen erfolgt wie bereits für den Laufstreifen beschrieben. Der Unterschied liegt in der Formgebung nach dem Extrusionsvorgang. Die so erhaltenen Formen der erfindungsgemäßen Kautschukmischung für eine oder mehrere unterschiedliche Body-Mischungen dienen dann dem Aufbau eines Reifenrohlings.
Zur Verwendung der erfindungsgemäßen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Zur Verwendung der erfindungsgemäßen Kautschukmischung in Schläuchen wird häufig keine so genannte Schwefelvernetzung, sondern eine peroxidische Vernetzung bevorzugt. Die Herstellung der Schläuche erfolgt zumeist analog dem im Handbuch der Kautschuktechnologie, Dr. Gupta Verlag, 2001, Kapitel 13.4 beschriebenen Verfahren.

Die Erfindung soll nun anhand von Vergleichs- und Ausführungsbeispielen, die in Tabellen 1 bis 5 zusammengefasst sind, näher erläutert werden. Die mit "E" gekennzeichneten Mischungen sind hierbei erfindungsgemäße Mischungen, während es sich bei den mit "V" gekennzeichneten Mischungen um Vergleichsmischungen handelt. Die mit "a" gekennzeichneten Tabellen stellen dabei die Mischungszusammensetzung dar, während die mit "b" gekennzeichneten Tabellen die dazugehörigen entsprechenden physikalischen Eigenschaften illustrieren.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei Raumtemperatur und 70°C gemäß DIN 53 512
- Mooney-Viskosität (ML 1+4) bei 100°C gemäß ASTM D1646
- Shore-A-Härte bei Raumtemperatur gemäß DIN 53 505
- Spannungswert bei 50% Dehnung bei Raumtemperatur gemäß DIN 53 504
- Bruchdehnung bei Raumtemperatur gemäß DIN 53 504
- Verlustfaktor tan d, synonym zu tan δ, bei 55°C aus dynamisch-mechanischer Messung gemäß DIN 53 513

**Tabelle 1a**

| **Bestandteile** | **Einheit** | **V1** | **E1** | **V2** | **E2** |
|---|---|---|---|---|---|
| Styrolbutadienkautschuk^{a} | phr | -- | -- | 100 | 100 |
| Styrolbutadienkautschuk^{b} | phr | 100 | 100 | -- | -- |
| Ruß^{c} | phr | 70 | 70 | 70 | 70 |
| Amphiphile Verbindung^{d} | phr | -- | 2 | -- | 2 |
| Silan^{e} | phr | -- | 0,7 | -- | 0,7 |
| Weichmacher^{f} | phr | 25 | 25 | 25 | 25 |
| Zinkoxid | phr | 2,5 | 2,5 | 2,5 | 2,5 |
| Verstärkerharz^{g} | phr | 11 | 1 | 1 | 1 |
| Zusatzstoffe^{h} | phr | 4,5 | 4,5 | 4,5 | 4,5 |
| Sulfenamidbeschleunigerⁱ | phr | 1,1 | 1,1 | 1,1 | 1,1 |
| Thiazolbeschleuniger (MBT) | phr | 0,2 | -- | 0,2 | -- |
| Schwefel | phr | 1,8 | 1,8 | 1,8 | 1,8 |

| | | | | | |
|---|---|---|---|---|---|
| ^{a} aminofunktionalisierter und Sn-gekoppelter SSBR, Nipol NS116, Nippon Zeon, ^{b} SSBR, Buna VSL 5025, Lanxess ^{c} N339 ^{d} PEG-Carbonsäureester, Struktol AW 1, Schill & Seilacher ^{e} 3-Mercaptopropyltriethoxysilan ^{f} TDAE ^{g} aliphatisches C5-Harz ^{h} DTPD, 6PPD, Ozonschutzwachs ⁱ Benzothiazyl-2-cyclohexylsulfenamid | | | | | |

**Tabelle 2a**

| **Bestandteile** | **Einheit** | **V3** | **V4** | **E3** |
|---|---|---|---|---|
| Styrolbutadienkautschukⁱ | phr | 100 | 100 | 100 |
| Ruß" | phr | 60 | 60 | 60 |
| Amphiphile Verbindungⁱⁱⁱ | phr | -- | 2 | 2,1 |
| Silani^{v} | phr | -- | -- | 0,72 |
| Weichmacher^{v} | phr | 19 | 19 | 19 |
| Zinkoxid | phr | 2,5 | 2,5 | 2,5 |
| Zusatzstoffe^{vi} | phr | 6 | 6 | 6 |
| Sulfenamidbeschleuniger^{vii} | phr | 1,8 | 1,8 | 1,8 |
| Schwefel | phr | 2,2 | 2,2 | 2,2 |

| | | | | |
|---|---|---|---|---|
| ⁱ SSBR, Buna VSL 5025, Lanxess ⁱⁱ N339 ⁱⁱⁱ Brij 30, Dow Chemical ^{iv} Si263 ^{v} TDAE ^{vi} TMQ, 6PPD, Ozonschutzwachs ^{vii} Benzothiazyl-2-cyclohexylsulfenamid | | | | |

**Tabelle 3a**

| **Bestandteile** | **Einheit** | **V5** | **E5** |
|---|---|---|---|
| Butadienkautschuk^{a} | phr | 30 | 30 |
| Styrolbutadienkautschuk^{b} | phr | 70 | 70 |
| Ruß^{c} | phr | 70 | 70 |
| Amphiphile Verbindung^{d} | phr | -- | 1,5 |
| Silan^{e} | phr | -- | 0,7 |
| Weichmacher^{f} | phr | 25 | 25 |
| Zinkoxid | phr | 2,5 | 2,5 |
| Verstärkerharz^{g} | phr | 1 | 1 |
| Zusatzstoffe^{h} | phr | 4,5 | 4,5 |
| Sulfenamidbeschleunigerⁱ | phr | 1,1 | 1,1 |
| Thiazolbeschleuniger (MBT) | phr | 0,2 | -- |
| Schwefel | phr | 1,5 | 1,5 |

| | | | |
|---|---|---|---|
| ^{a} High Cis BR, Neocis BR, Polimeri ^{b} gekoppelter SSBR, Nipol NS210, Nippon Zeon, ^{c} N339 ^{d} PEG-Carbonsäureester, Struktol AW 1, Schill & Seilacher ^{e} 3-Mercaptopropyltriethoxysilan ^{f} TDAE ^{g} aliphatisches C5-Harz ^{h} DTPD, 6PPD, Ozonschutzwachs ⁱ Benzothiazyl-2-cyclohexylsulfenamid | | | |

**Tabelle 4a**

| **Bestandteile** | **Einheit** | **V6** | **E6** | **V7** | **E7** |
|---|---|---|---|---|---|
| Naturkautschuk, TSR | phr | 50 | 50 | -- | -- |
| Butadienkautschuk^{a} | phr | -- | -- | 30 | 30 |
| Styrolbutadienkautschuk^{b} | phr | 50 | 50 | 70 | 70 |
| Ruß^{c} | phr | 60 | 60 | 58 | 58 |
| Amphiphile Verbindung^{d} | phr | -- | 1 | -- | 1,4 |
| Silan^{e} | phr | -- | 0,5 | -- | 0,7 |
| Weichmacher^{f} | phr | 14 | 14 | 23 | 23 |
| Zinkoxid | phr | 3 | 3 | 3 | 3 |
| Zusatzstoffe^{g} | phr | 4,5 | 4,5 | 4,5 | 4,5 |
| Sulfenamidbeschleuniger^{h} | phr | 1,1 | 1,1 | 1,1 | 1,1 |
| Thiazolbeschleuniger (MBT) | phr | 0,2 | -- | 0,2 | -- |
| Schwefel | phr | 1,5 | 1,5 | 1,5 | 1,5 |

| | | | | | |
|---|---|---|---|---|---|
| ^{a} High Cis BR, Neocis BR, Polimeri ^{b} SSBR, Nipol NS210, Nippon Zeon, ^{c} N339 ^{d} PEG-Carbonsäureester, Struktol AW 1, Schill & Seilacher ^{e} 3-Mercaptopropyltriethoxysilan ^{f} TDAE ^{g} DTPD, 6PPD, Ozonschutzwachs ^{h} Benzothiazyl-2-cyclohexylsulfenamid | | | | | |

**Tabelle 5a**

| **Bestandteile** | **Einheit** | **V8*** | **E8*** | **E9**** |
|---|---|---|---|---|
| Naturkautschuk^{a} | phr | 50 | 50 | 50 |
| Styrolbutadienkautschuk^{b} | phr | 50 | 50 | 50 |
| Ruß^{c} | phr | 50 | 50 | 50 |
| Amphiphile Verbindung^{d} | phr | -- | 2 | 2 |
| Silan^{e} | phr | -- | 0,75 | 0,75 |
| Weichmacher^{f} | phr | 4 | -- | -- |
| Zinkoxid | phr | 3 | 3 | 3 |
| Zusatzstoffe^{g} | phr | 4,5 | 4,5 | 4,5 |
| Sulfenamidbeschleuniger^{h} | phr | 1,1 | 1,1 | 1,1 |
| Schwefel | phr | 1,5 | 1,5 | 1,5 |

| | | | | |
|---|---|---|---|---|
| ^{a} TSR ^{b} aminofunktionalisierter und Sn-gekoppelter SSBR, Nipol NS116, Nippon Zeon, ^{c} N339 ^{d} PEG-Carbonsäureester, Struktol AW 1, Schill & Seilacher ^{e} 3-Mercaptopropyltriethoxysilan ^{f} TDAE ^{g} DTPD, 6PPD, Ozonschutzwachs ^{h} Benzothiazyl-2-cyclohexylsulfenamid * alle Mischungsbestandteile bis auf das Vulkanisationssystem wurden einer Mischstufe in einem Mischer gemischt ** NR/SSBR, Ruß, Silan und amphiphile Verbindung wurden in einer ersten Mischstufe in einem Mischer gemischt, alle weiteren Bestandteile bis auf das Vulkanisationssystem wurden in einer zweiten Mischstufe hinzugefügt | | | | |

Die Zugabe des Vulkanisationssystems erfolgt jeweils für * und ** in der Fertigmischstufe.

**Tabelle 1b**

| **Eigenschaft** | **Einheit** | **V1** | **E1** | **V2** | **E2** |
|---|---|---|---|---|---|
| Mooney-Viskosität | Mooney | 68,8 | 74,9 | 67,9 | 67 |
| | | | | | |
| Härte | Shore A | 64,75 | 61,95 | 60,85 | 57,75 |
| Rückprall bei RT | % | 13,56 | 14,58 | 21,67 | 22,92 |
| Rückprall bei 70°C | % | 40,85 | 47,71 | 51,23 | 56,06 |
| Delta Rückprall | % | 27,29 | 33,13 | 29,57 | 33,14 |
| Bruchdehnung | % | 352 | 326 | 339 | 338 |
| Spannungswert 50% | MPa | 1,5 | 1,5 | 1,3 | 1,2 |
| tan δ | -- | 0,26 | 0,23 | 0,22 | 0,19 |

**Tabelle 2b**

| **Eigenschaft** | **Einheit** | **V3** | **V4** | **E4** |
|---|---|---|---|---|
| Mooney-Viskosität | Mooney | 73,2 | 65,2 | 70,5 |
| | | | | |
| Härte | Shore A | 67 | 63 | 63 |
| Rückprall bei RT | % | 14,20 | 14,28 | 15,60 |
| Rückprall bei 70°C | % | 41,91 | 43,84 | 50,37 |
| Delta Rückprall | % | 27,71 | 29,56 | 34,77 |
| Bruchdehnung | % | 395 | 365 | 340 |
| Spannungswert 50% | MPa | 1,6 | 1,5 | 1,6 |
| tan δ | -- | 0,24 | 0,24 | 0,19 |

**Tabelle 3b**

| **Eigenschaft** | **Einheit** | **V5** | **E5** |
|---|---|---|---|
| Mooney-Viskosität | Mooney | 63,2 | 64,4 |
| | | | |
| Härte | Shore A | 62 | 58 |
| Rückprall bei RT | % | 38,87 | 42,50 |
| Rückprall bei 70°C | % | 48,65 | 52,12 |
| Delta Rückprall | % | 9,78 | 9,62 |
| Bruchdehnung | % | 414 | 482 |
| Spannungswert 50% | MPa | 1,2 | 1,1 |

**Tabelle 4b**

| **Eigenschaft** | **Einheit** | **V6** | **E6** | **V7** | **E7** |
|---|---|---|---|---|---|
| Mooney-Viskosität | Mooney | 71,5 | 65,6 | 57,3 | 58,1 |
| | | | | | |
| Härte | Shore A | 60 | 57 | 60 | 59 |
| Rückprall bei RT | % | 38,05 | 41,39 | 37,60 | 42,03 |
| Rückprall bei 70°C | % | 52,38 | 57,47 | 49,19 | 53,90 |
| Delta Rückprall | % | 14,33 | 16,08 | 11,59 | 11,87 |
| Bruchdehnung | % | 473 | 467 | 416 | 442 |
| Spannungswert 50% | MPa | 1,2 | 1,2 | 1,2 | 1,2 |
| tan δ | -- | 0,18 | 0,16 | 0,22 | 0,17 |

**Tabelle 5b**

| **Eigenschaft** | **Einheit** | **V8*** | **E8*** | **E9**** |
|---|---|---|---|---|
| Mooney-Viskosität | Mooney | 67 | 59,5 | 62,9 |
| | | | | |
| Härte | Shore A | 60 | 59 | 60 |
| Rückprall bei RT | % | 35,53 | 33,56 | 35,02 |
| Rückprall bei 70°C | % | 62,07 | 63,09 | 64,61 |
| Delta Rückprall | % | 26,54 | 29,53 | 29,59 |
| Bruchdehnung | % | 445 | 428 | 433 |
| Spannungswert 50% | MPa | 1,3 | 1,3 | 1,3 |
| tan δ | -- | 0,15 | 0,13 | 0,12 |

Aus den Tabellen 1 bis 5 wird ersichtlich, dass die erfindungsgemäßen Kautschukmischungen E1 bis E9** einen deutlichen Vorteil hinsichtlich des Zielkonfliktes Rollwiderstand versus Nassgriff bieten, während die weiteren physikalischen Eigenschaften auf annähernd gleichem Niveau verbleiben, sich z.T. sogar zusätzlich verbessern. Insbesondere das Bruchdehnungsverhalten wird nicht negativ beeinflusst. Das Rollwiderstandsverhalten wird hierbei anhand der Rückprallelastizität bei 70°C dargestellt, wobei höhere Werte eine Verbesserung darstellen. Das Nassgriffverhalten wird anhand des Rollwiderstandsverhaltens bei Raumtemperatur illustriert, wobei niedrigere Werte eine Verbesserung darstellen. "Delta Rückprall" gibt wiederum die Differenz zwischen den beiden Rückprallwerten an. Eine Erhöhung dieser Differenz im bedeutet im Allgemeinen, dass der Zielkonflikt zwischen Rollwiderstand und Nassgriff besser gelöst wird. Eine Erhöhung des Wertes für die Bruchdehnung zeigt eine Verbesserung derselben an. Bei der Betrachtung der Ergebnisse ist allerdings zu bedenken, dass nicht eine Eigenschaft alleine verbessert werden soll, sondern dass der Zielkonflikt zwischen sich üblicherweise gegensätzlich verhaltenen Eigenschaften gelöst oder zumindest entschärft werden soll ohne dass die weiteren physikalischen Eigenschaften sich nennenswert verschlechtern.

## Patentansprüche

1. Kautschukmischung, **dadurch gekennzeichnet, dass** sie
- wenigstens einen synthetischen Dienkautschuk und
- wenigstens einen Ruß und
- wenigstens ein Silan und
- wenigstens eine amphiphile Verbindung enthält,
wobei das Silan ein Mercaptosilan ist und wobei die amphiphile Verbindung ein nichtionisches Tensid ist und wobei das nichtionische Tensid ein Polyoxyethylen-Fettsäureester ist.

2. Kautschukmischung nach Anspruch 1, **dadurch gekennzeichnet, dass** der synthetische Dienkautschuk ein lösungspolymerisierter Styrolbutadienkautschuk ist.

3. Kautschukmischung nach Anspruch 1 oder 2, **dadurch gekennzeichnet, dass** das Silan in Mengen von 0,3 bis 5 phr verwendet wird.

4. Kautschukmischung nach einem der Ansprüche 1 bis 3, **dadurch gekennzeichnet, dass** sie 0,5 bis 10 phr zumindest einer amphiphilen Verbindung enthält.

5. Verwendung einer Kautschukmischung nach einem der Ansprüche 1 bis 4 zur Herstellung eines Reifens.

6. Verwendung einer Kautschukmischung nach Anspruch 5 zur Herstellung des Laufstreifens und / oder einer Body-Mischung eines Reifens.

7. Verwendung einer Kautschukmischung nach einem der Ansprüche 1 bis 4 zur Herstellung eines Gurtes, Riemens oder Schlauches.

## Claims

1. Rubber mixture, **characterized in that** it comprises
- at least one synthetic diene rubber, and
- at least one carbon black, and
- at least one silane, and
- at least one amphiphilic compound, where the silane is a mercaptosilane and where the amphiphilic compound is a nonionic surfactant and where the nonionic surfactant is a polyoxyethylene fatty acid ester.

2. Rubber mixture according to Claim 1, **characterized in that** the synthetic diene rubber is a solution-polymerized styrene-butadiene rubber.

3. Rubber mixture according to Claim 1 or 2, **characterized in that** the amounts used of the silane are from 0.3 to 5 phr.

4. Rubber mixture according to any of Claims 1 to 3, **characterized in that** it comprises from 0.5 to 10 phr of at least one amphiphilic compound.

5. Use of a rubber mixture according to any of Claims 1 to 4 for producing a tire.

6. Use of a rubber mixture according to Claim 5 for producing the tread and/or a body mixture of a tire.

7. Use of a rubber mixture according to any of Claims 1 to 4 for producing a drive belt or other belt, or hose.

## Revendications

1. Mélange de caoutchouc, **caractérisé en ce qu'**il contient :
- au moins un caoutchouc diénique synthétique et
- au moins un noir de carbone et
- au moins un silane et
- au moins un composé amphiphile,
le silane étant un mercaptosilane et le composé amphiphile étant un tensioactif non ionique et le tensioactif non ionique étant un ester d'acide gras de polyoxyéthylène.

2. Mélange de caoutchouc selon la revendication 1, **caractérisé en ce que** le caoutchouc diénique synthétique est un caoutchouc de styrène-butadiène polymérisé en solution.

3. Mélange de caoutchouc selon la revendication 1 ou 2, **caractérisé en ce que** le silane est utilisé en quantités de 0,3 à 5 pce.

4. Mélange de caoutchouc selon l'une quelconque des revendications 1 à 3, **caractérisé en ce qu'**il contient 0,5 à 10 pce d'au moins un composé amphiphile.

5. Utilisation d'un mélange de caoutchouc selon l'une quelconque des revendications 1 à 4 pour la fabrication d'un pneu.

6. Utilisation d'un mélange de caoutchouc selon la revendication 5 pour la fabrication de la bande de roulement et/ou d'un mélange de corps d'un pneu.

7. Utilisation d'un mélange de caoutchouc selon l'une quelconque des revendications 1 à 4 pour la fabrication d'une ceinture, d'une courroie ou d'un tuyau.
